# EUROPÄISCHE PATENTSCHRIFT

(11) **EP 3 181 497 B1**
(45) Veröffentlichungstag und Bekanntmachung des Hinweises auf die Patenterteilung: **20.02.2019**
(21) Anmeldenummer: 15201103.7
(22) Anmeldetag: 18.12.2015
(51) Int. Cl.: B65G 53/20

(54) **UMLENKEINHEIT FÜR PNEUMATISCHE FÖRDERANLAGE**
DEFLECTION UNIT FOR PNEUMATIC CONVEYING APPARATUS
UNITE DE DEVIATION POUR TRANSPORTEUR PNEUMATIQUE

(43) Veröffentlichungstag der Anmeldung: 21.06.2017
(73) Patentinhaber: Claudius Peters Projects GmbH, 21614 Buxtehude (DE)
(72) Erfinder: Hilgraf, Peter, 22149 Hamburg (DE)
(74) Vertreter: Glawe, Delfs, Moll

(56) Entgegenhaltungen:
- EP-A1- 0 493 279
- WO-A1-2011/055026
- DE-U1-202013 009 364
- JP-A- H03 205 216
- JP-A- 2015 182 884

## Beschreibung

Die Erfindung betrifft eine Umlenkeinheit für pneumatische Förderanlagen zum Fördern von Schüttgut, insbesondere pulverförmigem Gut, mit einer Arbeitskammer, an die ein Zulaufrohr und ein Ablaufrohr angeschlossen sind.

Zum Transport von Schüttgut, insbesondere pulverförmigem Gut, sind Förderanlagen bekannt, bei denen das Schüttgut in geschlossenen Förderleitungen transportiert wird. Hierbei wird zur Gewährleistung eines effizienten Transports die Reibung zwischen Rohr und dem zu fördernden Gut vermindert durch eine Fluidisierung des Guts. Dazu weisen die Förderrohre abschnittsweise Fluidisierböden auf, durch die ein Fluidisiergas zugeführt wird. Für die Bewirkung einer effektiven Vorwärtsbewegung sind gesonderte Treibgasquellen vorgesehen. Auf diese Weise kann ein effektiver Transport über verhältnismäßig lange Strecken erfolgen, und zwar über eine an sich beliebige Führungsweise des Förderpfads. Es können Horizontal- und Vertikalstrecken überwunden werden, insbesondere sind auch aufwärts führende Abschnitte ermöglicht. Um den Förderpfad von der Horizontalen in die Vertikale umzulenken, sind Umlenkstücke erforderlich. Diese werden als Umlenkeinheit bezeichnet.

Die Umlenkung in die Vertikale ist fördertechnisch kritisch. Es kommt hierbei zu einem Abbremsen des Schüttgutstroms, außerdem sind die Vertikalstrecken typischerweise nicht mit Fluidisierluft versorgt. Um ein Einbrechen der Fördergeschwindigkeit zu vermeiden, ist es daher üblich, dass der Förderquerschnitt in der Vertikalstrecke verengt ausgeführt ist, und zwar in einem definierten Verhältnis zu dem Förderquerschnitt in der vorausgehenden Horizontalstrecke. Hierzu sind spezielle Anpassstücke vorgesehen, welche nicht nur eine 90° Umlenkung von Horizontal auf Vertikal beinhalten, sondern zusätzlich eine Durchmesserverringerung zum vertikalen Auslassrohr hin aufweisen. Diese Anpassstücke sind speziell für bestimmte Kombinationen von Einlassrohrdurchmesser zu Auslassrohrdurchmesser ausgeführt und darauf abgestimmt. Das bedeutet, dass für sämtliche möglichen Kombinationen von Einlassrohrdurchmesser einerseits und Auslassrohrdurchmesser andererseits ein eigenes, gesondertes Anpassstück erforderlich ist. Es sind sehr viele unterschiedliche Anpassstücke erforderlich, was nicht nur unwirtschaftlich in der Herstellung ist, sondern auch Schwierigkeiten mit der Bevorratung von Ersatzteilen verursacht. Typischerweise werden für eine Förderanlage, die mit sieben verschiedenen Horizontaldurchmessern lieferbar ist, gut 50 verschiedene Anpassstücke benötigt. Solche Förderanlagen sind aus der WO 2011/055026 A1 oder EP 0 493 279 A1 bekannt.

Der Erfindung liegt die Aufgabe zugrunde, eine verbesserte Umlenkeinheit für Förderanlagen zu schaffen, die universeller verwendbar ist.

Die erfindungsgemäße Lösung liegt in den Merkmalen der unabhängigen Ansprüche. Vorteilhafte Weiterbildungen sind Gegenstand der abhängigen Ansprüche.

Bei einer Umlenkeinheit für eine Förderanlage zum pneumatischen Fördern von Schüttgut, insbesondere pulverförmigem Gut als fluidisierte Fördergutsträhne, deren Oberseite einen Fördergutspiegel bildet, durch geschlossene Rohrleitungen, wobei die Umlenkeinheit eine Arbeitskammer mit Seitenwänden, einem Boden und einer Decke aufweist, und ein Zulaufrohr an eine Seitenwand angeschlossen ist und ein Ablaufrohr geodätisch oberhalb des Zulaufrohrs an der Decke angeordnet ist und quer zum Zulaufrohr orientiert ist, wobei in der Arbeitskammer ein eigener Fluidisierboden mit eigener Fluidisiergaszufuhr vorgesehen ist, ist erfindungsgemäß der eigene Fluidisierboden unabhängig von einer Fluidisierung im Zulaufrohr regelbar und das Ablaufrohr mit einem vertikal von oben in die Arbeitskammer ragenden Tauchrohr ausgeführt,
dessen Länge so bemessen ist, dass seine Mündung unterhalb des Fördergutspiegels in die fluidisierte Fördergutsträhne eintaucht.

Zuerst seien einige verwendete Begriffe erläutert:
Unter Förderanlagen werden vorliegend solche Förderanlagen verstanden, bei denen Schüttgut, insbesondere pulverförmiges Schüttgut, fluidisiert durch geschlossene Rohrleitungen gefördert wird. Dazu weisen die Förderleitungen Abschnitte mit Fluidisierböden auf, durch die ein Fludisiergas zugeführt wird. Es bildet sich dann oberhalb des Fluidisierbodens eine fluidisierte Fördergutsträhne, die durch ein Treibgas in Transportrichtung bewegt ist. Oberhalb des durch die fluidisierte Fördergutsträhne gebildeten Fördergutspiegels ist ein Freiraum, durch den Fördergas strömt.

Unter einem Fördergutspiegel wird eine Niveauebene verstanden, welche durch die Oberseite der fluidisierten Fördergutsträhne gemäß Auslegung der Förderanlage bestimmt ist.

Die Erfindung hat erkannt, dass durch das Versehen des Ablaufrohres mit einem in die fluidisierte Fördergutsträhne ragenden Tauchrohr eine verbesserte Durchmischung von Fördergas und zu förderndem Schüttgut erreicht werden kann. Bedingt durch die Mündung des Tauchrohrs in der Fördergutsträhne wird das Fördergas umgelenkt, und zwar durch die Fördergutsträhne hindurch. Dadurch wird das Fördergas gezwungen, sich intensiv mit den Feststoffen in der Fördergutsträhne zu vermischen, und hierbei seine Antriebskräfte auf den Feststoff in der Fördergutsträhne zu übertragen. Damit wird der Feststoff in der Fördergutsträhne von dem Fördergasstrom quasi mitgerissen und gemeinsam mit dem Fördergas durch die Mündung des Tauchrohrs nach oben vertikal abgeführt. Dank der Ausführung als Tauchrohr wird ein unerwünschter Bypass des Fördergases vom Raum oberhalb der Fördergutsträhne direkt in das Ablaufrohr wirksam unterbunden. Das somit zur Umlenkung gezwungene Fördergas bewirkt eine Erneuerung der Fluidisierung des Feststoffs in der Fördergutsträhne und wirkt zusätzlich antreibend. Damit gelingt die Umlenkung der Fördergutsträhne in die vertikale Richtung auf effiziente Weise. Eine genau auf den Durchmesser des Freiraums oberhalb des Fluidisierbodens der Horizontalstrecke im Zulauf abgestimmte Verringerung des Durchmessers im Vertikalrohr ist nicht mehr zwingend erforderlich. In den meisten Fällen genügt es, wenn der Querschnitt des Tauchrohrs kleiner (oder gleich groß) ist wie die Querschnittsfläche des Freiraums oberhalb des Fördergutspiegels. So kann die erfindungsgemäße Umlenkeinheit weitgehend universell verwendet werden. Die im Stand der Technik erforderliche große Anzahl verschiedener Bauteile ist nicht mehr erforderlich. Überdies neigt die erfindungsgemäße Umlenkeinheit dank ihrer hohen Effektivität einschließlich der Re-Fluidisierung des Schüttguts weniger zu einem Verstopfen, sodass sich auch die Förderleistung insgesamt verbessert verglichen mit den im Stand der Technik verwendeten Anpassstücken.

Es ist bevorzugt, dass die Mündung des Tauchrohrs tiefer liegt als auf 60% der Höhe des Zulaufrohranschlusses, vorzugsweise tiefer als 50% der Höhe des Zulaufrohranschlusses. Es hat sich gezeigt, dass mit einer solchen Bemessung des Tauchrohrs, wonach dessen Mündung knapp die Hälfte der Höhe von oben in die Arbeitskammer hereinragt, zum einen ein guter Umlenkungseffekt erzielt wird durch ausreichend tiefes Eintauchen des Tauchrohrs in die Fördergutsträhne, und zum anderen ein guter Durchsatz und geringer Druckverlust erzielt wird. Es gilt insbesondere dann, wenn die Höhe der Mündung mindestens in 30% der Höhe des Zulaufrohranschlusses liegt. Damit ergibt sich ein optimales Betriebsverhalten.

Weiter ist vorzugsweise die Mündung des Tauchrohrs so ausgestattet, dass sie schräg angeschnitten ist. Zweckmäßigerweise ist die Schrägung hierbei so orientiert, dass sie dem Zulaufrohranschluss zugewandt ist. Dadurch variiert die Höhe des Rands der Mündung, und zwar so dass der Rand auf der dem Zulaufrohranschluss zugewandten Seite höher liegt als auf der abgewandten Seite, wo der Rand ähnlich einer Schürze tiefer nach unten in die Fördergutsträhne reicht. Die Anschrägung ist hierbei vorzugsweise ein Winkel zwischen 5 und 20 Grad gewählt. Sie ist hierbei so auf die Länge des Tauchrohrs abgestimmt, dass der gesamte Mündungsbereich in die Fördergutsträhne eintaucht. Mit einer derart ausgeführten Anschrägung ergeben sich günstigere Einlaufbedingungen für den umgelenkten, fluidisierten Fördergutstrom. Die durch die Umlenkung unvermeidbar entstehenden Verluste werden auf diese Weise minimiert. Außerdem ergibt sich überraschenderweise ein besserer Verschleißschutz.

Zur generellen Erhöhung des Verschleißschutzes ist vorzugsweise die Mündung des Tauchrohrs mit einer Panzerung versehen. Dies gilt insbesondere für den dem Zulaufrohranschluss zugewandten Bereich der Mündung. In vielen Fällen wird aber die gesamte Mündung mit der Panzerung versehen sein. Die Panzerung bildet einen Verschleißschutz, der insbesondere bei abrasiven Fördergut das Tauchrohr vor übermäßiger Abnutzung schützt. Die Panzerung kann zweckmäßigerweise als eine Aufschweißpanzerung ausgeführt sein. Sie kann bei einer bevorzugten Ausführungsform aber auch als ein umlaufender Kragen aus einem verschleißbeständigen Material, insbesondere Hartmetall, ausgeführt sein. Die Lebensdauer des Tauchrohrs verbessert sich somit, wodurch die Wartungsanforderungen geringer werden. Der umlaufende Kragen ragt vorzugsweise nach innen, um gegebenenfalls einen Austausch des Tauchrohrs zu vereinfachen.

In den meisten Fällen dient die Umlenkeinheit zum Umlenken des Förderstroms aus der Horizontalen in die Vertikale. Jedoch braucht dies nicht zwingend ein 90 Grad Umlenkwinkel zu sein. Vorzugsweise können Abweichungen von +/- 1 Grad vorgesehen sein, sodass das Tauchrohr nicht zwingend exakt vertikal orientiert sein muss. Entsprechendes gilt auch für die horizontale Zuführung, die ebenfalls nicht unbedingt exakt horizontal sein muss, sondern mit der angegebenen Toleranz ausgeführt sein kann. Damit erhöht sich die Flexibilität hinsichtlich der Anwendbarkeit und damit auch die Möglichkeit zur freien Rohrführung bei der mit der erfindungsgemäßen Umlenkeinheit ausgestatteten Förderanlage.

Zweckmäßigerweise ist das Tauchrohr ausgeführt in einer Rohr-in-Rohrbauweise. Es gibt demnach also ein Innen- und Außenrohr, wobei vorzugsweise das Tauchrohr das Innenrohr bildet. Damit kann im Bedarfsfall das verschleißträchtige Tauchrohr ausgewechselt werden, ohne das deshalb das Außenrohr ausgetauscht zu werden braucht. Damit bleibt die Förderanlage geschlossen, was die Instandhaltung einfacher und kostengünstiger macht.

Erfindungsgemäß ist in der Arbeitskammer der Umlenkeinheit ein eigener Fluidisierboden vorgesehen. Dieser ist mit einer eigenen Fluidisiergaszufuhr versehen. Auf diese Weise wird sichergestellt, dass auch in der Arbeitskammer eine ausreichend starke Fluidisierung des Förderguts aufrechterhalten bleibt und damit die Fördergutsträhne stabil ist. Das ist wichtig, da es insbesondere bei Umlenkungen in die Vertikale aus verschiedenen Gründen leicht zu Verstopfungen kommen kann, die zu einem instabilen Betrieb der Förderanlage bzw. zu deren Ausfall führen können. Durch den eigenen Fluidisierboden mit eigener Fluidisiergaszufuhr kann dies wirksam verhindert werden. Dies gilt dann, wenn die
eigene Fluidisiergaszufuhr unabhängig regelbar ist von der Fluidisierung im Zulaufrohr. Auf diese Weise wird eine feinere Abstimmung an die besonderen Erfordernisse im Bereich der Umlenkeinheit in die Vertikale erreicht.

Besonders zweckmäßig ist es, eine Zusatzgasdüse so anzuordnen, dass sie sich unterhalb des Tauchrohrs befindet, und zwar vorzugsweise konzentrisch zu dem Tauchrohr. Damit zielt der zusätzliche Gasstrom, welcher aus der Zusatzgasdüse austritt, in das Tauchrohr hinein, und prägt so dem umzulenkenden Gasstrom die gewünschte Richtung auf. Die Zusatzgasdüse verfügt vorzugsweise über einen eigenen Gasanschluss, und ihre Ausblasöffnung liegt zweckmäßigerweise auf Höhe des Fluidisierbodens. Die Fördereffizienz bei der Umlenkung wird dadurch erhöht, ferner verringert sich die Gefahr unerwünschter Verstopfungen.

Bei einer zweckmäßigen Ausführungsform ist die Umlenkeinheit ausgeführt wie ein T-Stück. Das bedeutet, dass sie mit einer zusätzlichen Horizontalöffnung versehen ist, die gegenüber dem Anschluss für das Zulaufrohr angeordnet ist und während des Betriebs durch einen abnehmbaren Flansch/Deckel verschlossen ist. Dies ermöglicht die Verwendung handelsüblicher Komponenten als Ausgangsprodukt für die erfindungsgemäße Umlenkeinheit. Ferner bietet die Ausführung als T-Stück den Vorteil, dass mit der zusätzlichen Horizontalöffnung eine Wartungsöffnung zur Verfügung steht, durch die gegebenenfalls erforderliche Arbeiten leicht erfolgen können. Hierbei kann es sich insbesondere um Inspektion des Tauchrohrs, insbesondere seiner Mündung handeln, oder um Arbeiten zum Austauschen bzw. Wiederaufbau des Verschleißschutzes am Tauchrohr. Ferner können eventuell in der Arbeitskammer sich absetzende Fremdkörper entnommen werden, die durch die erfindungsgemäße Umlenkeinheit ähnlich der Wirkung eines Fliehkraftseperators aus dem Fördergutstrom ausgetragen werden. Besonders zweckmäßig ist es hierbei, wenn die zusätzliche Horizontalöffnung mit einem abnehmbaren Deckel verschlossen ist. Dieser ist vorzugsweise mittels eines Flansches befestigt. Dadurch verbessert sich die Handhabbarkeit weiter.

Die Erfindung erstreckt sich ferner auf eine mit einer entsprechenden Umlenkeinheit versehene Förderanlage. Zur näheren Erläuterung wird auf vorstehende Beschreibung verwiesen.

Die Erfindung wird nachfolgend unter Bezugnahme auf die beigefügte Zeichnung näher erläutert, in der ein vorteilhaftes Ausführungsbeispiel dargestellt ist. Es zeigen:
- Fig. 1:: eine schematische Darstellung einer Förderanlage mit einer Umlenkeinheit gemäß einem Ausführungsbeispiel der Erfindung;
- Fig. 2:: eine Schnittansicht durch ein Horizontalsegment der Förderanlage;
- Fig. 3:: eine Schnittansicht der Umlenkeinheit gemäß der Linie III-III in der Fig. 1; und
- Fig. 4:: eine Ansicht im Längsschnitt durch die Umlenkeinheit.

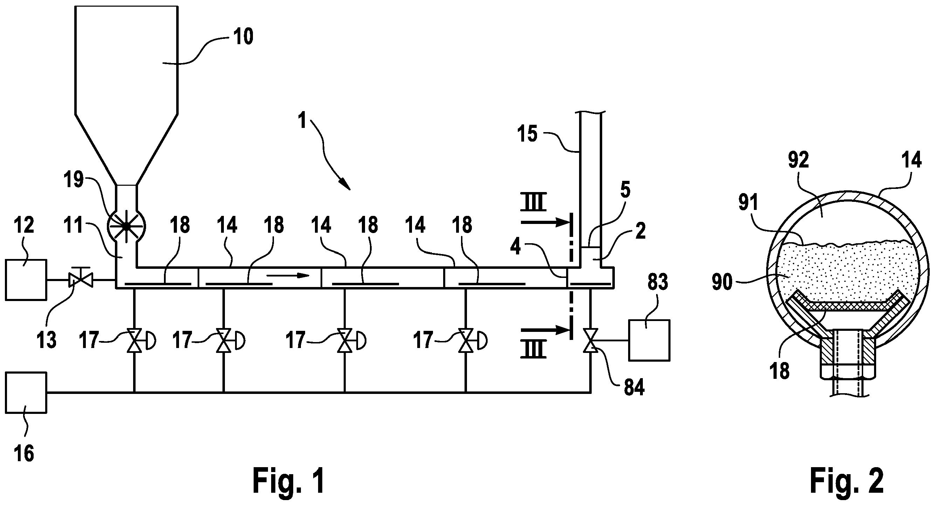

Eine Fluidisieranlage 1 zum Transport von Schüttgut durch geschlossene Rohre mittels Fluidisierung ist in Fig. 1 dargestellt. Aus einem Vorratsbehälter 10 wird zu förderndes Schüttgut über eine Zellenradschleuse 19 (oder ein anderes geeignetes Schleussystem, z. B. eine Schneckenschleuse, ein Druckgefäß usw.) einer Aufgabeeinrichtung 11 zugeführt. Von hier wird es durch an sich beliebig horizontale Rohrabschnitte 14 und vertikale Rohrabschnitte 15, die auch abwechselnd angeordnet sein können, weiter transportiert. Zum Aufbringen einer antreibenden Kraft auf das fluidisierte Schüttgut in den horizontalen und vertikalen Rohrabschnitten 14, 15 ist eine Treibgasquelle 12 vorgesehen, welche über eine Dosiereinrichtung 13 an einer Stirnseite der Aufgabeeinrichtung 11 Treibgas zuführt. Damit wird eine Antriebskraft auf das fluidisierte Schüttgut in den Rohrleitungen ausgeübt, sodass es sich in Förderrichtung (s. Pfeil in Fig. 1) bewegt.

Um die innere Reibung des Förderguts und die Reibung gegenüber der Wandung der Rohre zu verringern, sind Fluidisiereinrichtungen 18 in den horizontalen Rohrabschnitten 14 vorgesehen. Ihnen wird ausgehend von einer Fluidisiergasquelle 16 über Regelventile 17 Fluidisiergas zugeführt. Das Fluidisiergas wird mittels der Fluidisiereinrichtungen 18 von unten in den Schüttgutstrom geblasen, wodurch es zu einer Fluidisierung des Schüttgutstroms kommt. Die innere Reibung sowie die Reibung zur Wandung der Rohrleitung wird dadurch erheblich verringert, zusätzlich wird auch eine weitere antreibende Kraft ausgeübt.

Im Betrieb bildet sich in den horizontalen Rohrabschnitten 14 eine Schüttgutverteilung aus, wie sie in Fig. 2 dargestellt ist. Unten erkennt man die Fluidisiereinrichtung 18, der durch den im unteren Bereich angeordneten Anschluss Fluidisierluft von der Fluidisierquelle 16 und das Regelventil 17 zugeführt wird. Die Fluidisierluft tritt durch einen gasdurchlässigen Boden in das zu fördernde Schüttgut ein und fluidisiert dieses. Es bildet sich eine Schichtung mit einer fluidisierten Fördergutsträhne 90 im unteren Bereich des Querschnitts der Rohrleitung 14 und einem darüber liegenden Gasraum 92 zur Längsströmung von Fluidisiergas im oberen Bereich des Querschnitts. Die entsprechenden Strömungsverhältnisse werden bei der Konstruktion und Dimensionierung von Schüttgut- und Fluidisiergaszufuhr festgelegt, sodass sich ein vorbestimmter Fördergutspiegel 91 einstellt, welcher die Oberseite der Fördergutsträhne 90 bildet. Auf diese Weise kann das Schüttgut auf effiziente Weise auch über lange Strecken gefördert werden.

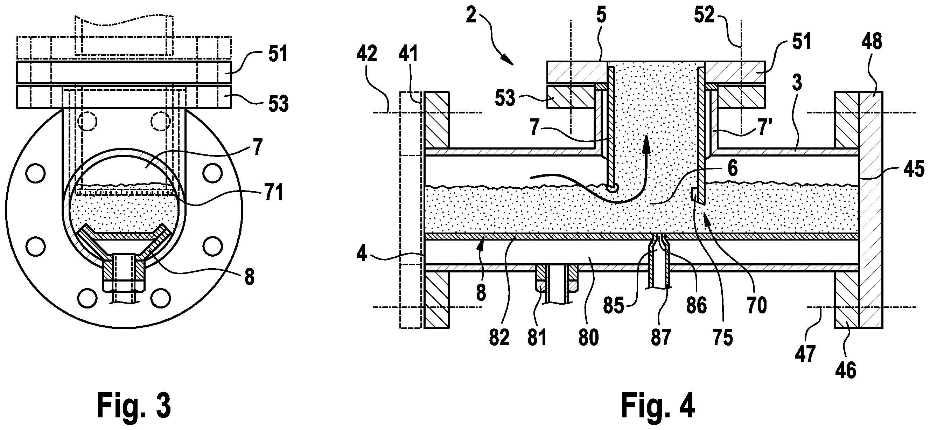

Um die horizontale Förderung durch eine vertikale Förderung zu ergänzen, ist eine Umlenkeinheit 2 vorgesehen. Sie lenkt den horizontalen Schüttgutstrom in den Rohrabschnitten 14 zum Weitertransport in einem vertikalen Rohrabschnitt 15 um. Aufbau und Funktionsweise der Umlenkeinheit 2 sind in Fig. 3 und 4 näher dargestellt.

Die Umlenkeinheit 2 weist einen T-förmigen Grundkörper 3 auf. An dessen einer Stirnseite ist ein Anschluss 4 für eine Zuflussleitung, nämlich die horizontalen Rohrabschnitte 14, vorgesehen. An der Oberseite ist ein Abfuhranschluss 5 zur Verbindung mit dem vertikalen Rohrabschnitt 15 vorgesehen. Die gegenüberliegende Stirnseite weist einen zusätzlichen Anschluss 45 auf, der als ein Blindstück ausgebildet ist und mittels eines Deckels 48 verschlossen ist. Der Deckel 48 ist abnehmbar auf einen Flansch 46 angeordnet und dort mittels Schraubverbindungen 47 abnehmbar befestigt. In dem T-Stück 3 ist ein Arbeitsraum 6 gebildet. Ihm wird Schüttgut durch den Zufuhranschluss 4 zugeführt, und es wird nach oben über den Abgabeanschluss 5 ausgetragen. In den Arbeitsraum 6 ragt von oben vertikal nach unten ein Tauchrohr 7. Es ist in seiner Länge und damit hinsichtlich seiner Eintauchtiefe so bemessen, dass seine Mündung 70 sich unterhalb des Fördergutspiegels 91, Fig. 2, befindet. Auf die Mündung 70 kann optional eine Panzerung in Gestalt einer Aufschweißpanzerung 71 oder mittels eines umlaufenden Verstärkungsrings 75 ein zusätzlicher Verschleißschutz vorgesehen sein. Das Tauchrohr 7 bildet eine Rohr-in-Rohkonstruktion zusammen mit einem Außenrohrstück 7'. Im unteren Bereich des Arbeitsraums 6 ist eine eigene Fluidisiereinrichtung 8 für die Umlenkeinheit 2 vorgesehen. Sie umfasst einen gasdurchlässigen Boden 82, der einen Fluidisiergasraum 80 unterhalb des Arbeitsraums 6 abteilt. Zur Zufuhr von Fluidisiergas zu dem Unterraum 80 ist ein eigener Fluidisiergasanschluss 81 vorgesehen. Dieser kann an beliebiger Stelle am Unterraum 80 vorgesehen sein. Zweckmäßigerweise ist optional eine Zusatzgasdüse 85 vorgesehen. Sie weist an ihrem oberen Ende eine Ausblassöffnung 86 und an ihrem unteren einen Gasanschluss 87 auf. Sie ist unterhalb des Tauchrohrs 7 so angeordnet, dass er konzentrisch mittig unter dem Tauchrohr 7 sitzt. Die Zusatzgasdüse ist so ausgeführt, dass sie den Unterraum 80 durchquert und ihre Ausblasöffnung 86 in Höhe der Oberseite des gasdurchlässigen Bodens 82 liegt.

Zur Befestigung des Tauchrohrs ist ein Flanschverbund bestehend aus den Flanschen 51, 53 vorgesehen, welches das Tauchrohr 7 an das Außenrohr 7' und damit an das T-Stück 3 fest und dicht befestigt.

Der Deckel 48 fungiert als Wartungszugang. Er kann bei Bedarf abgenommen werden, um eine Kontrolle des Zustands des Tauchrohrs 7 zu ermöglichen und gegebenenfalls die Panzerung auszubessern oder auszutauschen. Ferner können gegebenenfalls Verstopfungen oder eingetragene Fremdkörper entfernt werden.

Zum Betrieb ist an dem Zufuhranschluss 4 die horizontale Rohrleitung 14 mittels einer Flanschverbindung 41 und Schraubverbindungen 42 angeschlossen, und an dem Abfuhranschluss 5 ist der vertikale Rohrabschnitt 15 mittels einer Flanschverbindung 51, 53 und Schraubverbindungen 52 fest angeschlossen. Der Deckel 48 ist im Betrieb aufgesetzt. Es stellt sich dann eine Fördergutverteilung ein, wie sie in Fig. 4 dargestellt ist. Der untere Bereich des Arbeitsraums 6 ist angefüllt von der Fördergutsträhne 90, während sich im oberen Bereich ein Bypass-Raum für das Fluidisiergas befindet. Das Tauchrohr 7 ragt mit seiner Mündung 70 bis unterhalb des Fördergutspiegels 91, der die Fördergutsträhne 90 von dem oberen Gasraum 92 trennt, und dringt damit in die Fördergutsträhne 90 ein. Dadurch ist das im oberen Gasraum 92 strömende Gas gezwungen, beim Übertritt in das vertikale Rohrsegment 15 in die Fördergutsträhne 90 einzutauchen, wie es durch den geschwungenen Pfeil in Fig. 4 symbolisiert ist. Bei diesem Durchtritt durch die Fördergutsträhne 90 überträgt das Gas seine Antriebskraft auf das Gut in der Fördergutsträhne 90, und bewirkt so die Vertikalbewegung des Förderguts durch das Tauchrohr 7 zum Abgabeanschluss 5 und weiter durch das vertikale Rohrsegment 15.

Die Vertikalumlenkung wird unterstützt durch das zusätzlich zugeführte Fluidisiergas, welches über den Anschluss 81 zugeführt wird. Damit wird sichergestellt, dass gerade in dem kritischen Bereich der Umlenkeinheit 2 eine ausreichende und stabile Fluidisierung vorhanden ist. Ferner bewirkt die Positionierung des Fluidisiergasanschluss 81 unmittelbar unterhalb des Tauchrohrs 7, das eine zusätzliche Förderwirkung in der Vertikalrichtung nach oben erreicht wird. Die Fluidisiergaszufuhr 81 für die eigene Fluidisiereinrichtung 8 ist über ein Regelventil 84 unabhängig von den Regelventilen 17 für die Fluidisiergaszufuhr in den übrigen Rohrabschnitten 14 verstellbar. Dazu kann vorzugsweise eine eigene Stelleinrichtung 83 vorgesehen sein.

Bei dem in Fig. 4 dargestellten Ausführungsbeispiel ist als optionale Gestaltung das Tauchrohr 7 in Bezug auf seine Mündung 70 schräg angeschnitten. Dadurch ragt das Tauchrohr in einen in der Strömungsrichtung hinten, also in Richtung zu dem Deckel 48 liegenden Bereich, wie eine Schürze weiter nach unten. Die Umlenkwirkung durch den Gasstrom (s. geschwungenen Pfeil) wird dadurch weiter verbessert.

## Patentansprüche

1. Umlenkeinheit für eine Förderanlage (1) zum pneumatischen Fördern von Schüttgut, insbesondere pulverförmigem Gut, als fluidisierte Fördergutsträhne (90), deren Oberseite einen Fördergutspiegel (91) bildet, durch geschlossene Rohrleitungen (14, 15), wobei die Umlenkeinheit (2) eine Arbeitskammer (6) mit Seitenwänden, einem Boden und einer Decke aufweist, und einem Zufuhrrohranschluss (4) an einer Seitenwand angeschlossen ist und ein Abfuhrrohranschluss (5) geodätisch oberhalb des Zufuhrrohranschlusses (4) an der Decke angeordnet ist, der quer zum Zufuhrrohranschluss (4) orientiert ist und für ein vertikal abgehendes Abfuhrrohr (15) ausgebildet ist, wobei in der Arbeitskammer (6) ein eigener Fluidisierboden (8) mit einer eigenen Fluidisiergaszufuhr (81) vorgesehen ist,
**dadurch gekennzeichnet, dass**
der eigene Fluidisierboden (8) unabhängig von einer Fluidisierung im Zulaufrohr regelbar ist und in der Arbeitskammer (6) am Abfuhrrohranschluss (5) ein vertikal von oben in die Arbeitskammer ragendes Tauchrohr (7) angeordnet ist, dessen Länge so bemessen ist, dass seine Mündung (70) unterhalb des Fördergutspiegels (91) in die fluidisierte Fördergutsträhne (90) eintaucht.

2. Umlenkeinheit nach Anspruch 1, **dadurch gekennzeichnet, dass** die Mündung des Tauchrohrs tiefer liegt als auf 60 % der Höhe des Zulaufrohranschlusses.

3. Umlenkeinheit nach Anspruch 1 oder 2, **dadurch gekennzeichnet, dass** die Mündung (70) schräg angeschnitten ist.

4. Umlenkeinheit nach einem der vorhergehenden Ansprüche, **dadurch gekennzeichnet, dass** die Mündung (70) mit einer Panzerung (71, 75) versehen ist, insbesondere in einem dem Zufuhrrohranschluss (4) zugewandten Bereich.

5. Umlenkeinheit nach einem der vorhergehenden Ansprüche, **dadurch gekennzeichnet, dass** das Tauchrohr (7) mit einer Winkelabweichung von höchstens 15° zur Vertikalen orientiert ist.

6. Umlenkeinheit nach einem der vorhergehenden Ansprüche, **dadurch gekennzeichnet, dass** das Tauchrohr (7) einen Querschnitt aufweist, der höchstens so groß ist wie eine Querschnittsfläche eines Freiraums (92) oberhalb des Fördergutspiegels (91).

7. Umlenkeinheit nach einem der vorhergehenden Ansprüche, **dadurch gekennzeichnet, dass** das Tauchrohr (7) in Rohr-in-Rohr Bauweise mit einem zusätzlichen Außenrohr (7') ausgeführt ist.

8. Umlenkeinheit nach einem der Ansprüche 1 bis 7, **dadurch gekennzeichnet, dass** die eigene Fluidisiergaszufuhr (81) unterhalb des Tauchrohrs (7) angeordnet ist, und zwar vorzugsweise konzentrisch zu dem Tauchrohr (7).

9. Umlenkeinheit nach einem der Ansprüche 1 bis 8, **dadurch gekennzeichnet, dass** eine Zusatzgasdüse (85) vorgesehen ist, die unterhalb des Tauchrohrs (7) angeordnet ist.

10. Umlenkeinheit nach Anspruch 9, **dadurch gekennzeichnet, dass** die Zusatzgasdüse (85) einen gesonderten Gasanschluss (87) aufweist, und vorzugsweise deren Ausblasöffnung (86) auf Höhe des Fluidisierbodens (8) liegt.

11. Umlenkeinheit nach einem der vorhergehenden Ansprüche, **dadurch gekennzeichnet, dass** sie T-stückartig ausgebildet ist mit einer zusätzlichen Horizontalöffnung (45) gegenüber dem Zufuhrrohr (14).

12. Umlenkeinheit nach Anspruch 11, **dadurch gekennzeichnet, dass** die zusätzliche Horizontalöffnung (45) mit einem abnehmbaren Deckel (48) verschlossen ist, der vorzugsweise mittels eines Flansches (46) befestigt ist.

13. Förderanlage zum pneumatischen Fördern von Schüttgut, inbesondere pulverförmigen Gut, als fluidisierte Fördergutsträhne (90), deren Oberseite einen Fördergutspiegel (91) bildet, durch geschlossene Rohrleitungen, an deren Anfang eine Treibgasquelle angeschlossen ist und die abschnittsweise mit Fluidisierböden versehen sind, denen Fluidisierluft zugeführt ist, wobei horizontale und vertikale Rohrleitungen über eine Umlenkeinheit verbunden sind,
**dadurch gekennzeichnet, dass**
die Umlenkeinheit nach einem der Ansprüche 1 bis 12 ausgebildet ist.

## Claims

1. Diverting unit for a conveying installation (1) for the pneumatic conveyance of bulk material, in particular powder material, as fluidized conveyed-material filaments (90), the top side of which forms a conveyed-material surface (91), through closed pipelines (14, 15), wherein the diverting unit (2) has a working chamber (6) with side walls, a base and a ceiling, and a feed pipe connector (4) is connected to a side wall, and a discharge pipe connector (5) is arranged geodetically above the feed pipe connector (4) on the ceiling, which discharge pipe connector is oriented transversely with respect to the feed pipe connector (4) and is designed for a discharge pipe (15) which leads away vertically, wherein, in the working chamber (6), there is provided a dedicated fluidizing plate (8) with a dedicated fluidizing gas feed (81),
**characterized in that**
the dedicated fluidizing plate (8) is controllable independently of a fluidization in the inflow pipe, and, in the working chamber (6), at the discharge pipe connector (5), there is arranged an immersion pipe (7) which projects vertically into the working chamber from above and the length of which is dimensioned such that its mouth (70) is immersed in the fluidized conveyed-material filaments (90) below the conveyed-material surface (91).

2. Diverting unit according to Claim 1, **characterized in that** the mouth of the immersion pipe is situated below 60% of the height of the inflow pipe connector.

3. Diverting unit according to Claim 1 or 2, **characterized in that** the mouth (70) is obliquely truncated.

4. Diverting unit according to any of the preceding claims, **characterized in that** the mouth (70) is equipped with a reinforcement (71, 75), in particular in a region facing towards the feed pipe connector (4) .

5. Diverting unit according to any of the preceding claims, **characterized in that** the immersion pipe (7) is oriented with an angular deviation of at most 15° with respect to the vertical.

6. Diverting unit according to any of the preceding claims, **characterized in that** the immersion pipe (7) has a cross section which is at most as large as a cross-sectional area of a free space (92) above the conveyed-material surface (91).

7. Diverting unit according to any of the preceding claims, **characterized in that** the immersion pipe (7) is of pipe-in-pipe design with an additional outer pipe (7').

8. Diverting unit according to any of Claims 1 to 7, **characterized in that** the dedicated fluidizing gas feed (81) is arranged below the immersion pipe (7), specifically preferable concentrically with respect to the immersion pipe (7).

9. Diverting unit according to any of Claims 1 to 8, **characterized in that** an additional gas nozzle (85) is provided which is arranged below the immersion pipe (7).

10. Diverting unit according to Claim 9, **characterized in that** the additional gas nozzle (85) has a separate gas connector (87), and preferably the discharge opening (86) of said additional gas nozzle is situated at the level of the fluidizing plate (8).

11. Diverting unit according to any of the preceding claims, **characterized in that** it is formed in the manner of a T piece, with an additional horizontal opening (45) opposite the feed pipe (14).

12. Diverting unit according to Claim 11, **characterized in that** the additional horizontal opening (45) is closed off by means of a removable cover (48), which is fastened preferably by means of a flange (46).

13. Conveying installation for the pneumatic conveyance of bulk material, in particular powder material, as fluidized conveyed-material filaments (90), the top side of which forms a conveyed-material surface (91), through closed pipelines, to the start of which there is connected a driving gas source and which are equipped in portions with fluidizing plates, to which fluidizing air is fed, wherein horizontal and vertical pipelines are connected by means of a diverting unit,
**characterized in that**
the diverting unit is designed according to any of Claims 1 to 12.

## Revendications

1. Unité de déviation pour un transporteur (1) servant au transport pneumatique d'un produit en vrac, en particulier d'un produit pulvérulent, en tant que traînée de produit en vrac fluidisé (90), dont la face supérieure forme un niveau de produit en vrac (91), à travers des conduites tubulaires fermées (14, 15), l'unité de déviation (2) comprenant une chambre de travail (6) dotée de parois latérales, d'un fond et d'un élément de recouvrement, et un raccord de tube d'alimentation (4) étant raccordé à une paroi latérale et un raccord de tube d'évacuation (5) étant disposé sur l'élément de recouvrement de manière géodésique au-dessus du raccord de tube d'alimentation (4), lequel raccord de tube d'évacuation est orienté transversalement au raccord de tube d'alimentation (4) et est réalisé pour un tube d'évacuation (15) bifurquant verticalement, un fond de fluidisation propre (8) doté d'une alimentation en gaz de fluidisation propre (81) étant prévu dans la chambre de travail (6),
**caractérisée en ce que**
le fond de fluidisation propre (8) peut être réglé indépendamment d'une fluidisation dans le tube d'alimentation, et un tube plongeur (7) faisant saillie verticalement depuis le haut dans la chambre de travail étant disposé dans la chambre de travail (6) au niveau du raccord de tube d'évacuation (5), tube plongeur dont la longueur est dimensionnée de telle sorte que son embouchure (70) plonge dans la traînée de produit en vrac fluidisé (90) en dessous du niveau de produit en vrac (91).

2. Unité de déviation selon la revendication 1, **caractérisée en ce que** l'embouchure du tube plongeur se situe plus bas qu'à 60 % de la hauteur du raccord de tube d'alimentation.

3. Unité de déviation selon la revendication 1 ou 2, **caractérisée en ce que** l'embouchure (70) est découpée en biais.

4. Unité de déviation selon l'une quelconque des revendications précédentes, **caractérisée en ce que** l'embouchure (70) est dotée d'un renforcement (71, 75), en particulier dans une région tournée vers le raccord de tube d'alimentation (4).

5. Unité de déviation selon l'une quelconque des revendications précédentes, **caractérisée en ce que** le tube plongeur (7) est orienté suivant un écart angulaire d'au maximum 15° par rapport à la verticale.

6. Unité de déviation selon l'une quelconque des revendications précédentes, **caractérisée en ce que** le tube plongeur (7) présente une section transversale qui est au maximum aussi grande qu'une aire en section transversale d'un espace libre (92) au-dessus du niveau de produit en vrac (91).

7. Unité de déviation selon l'une quelconque des revendications précédentes, **caractérisée en ce que** le tube plongeur (7) est réalisé de manière à présenter un tube extérieur supplémentaire (7') suivant une configuration de tubes coaxiaux.

8. Unité de déviation selon l'une quelconque des revendications 1 à 7, **caractérisée en ce que** l'alimentation en gaz de fluidisation propre (81) est disposée en dessous du tube plongeur (7), et ce de préférence concentriquement au tube plongeur (7).

9. Unité de déviation selon l'une quelconque des revendications 1 à 8, **caractérisée en ce qu'**une buse à gaz auxiliaire (85) est prévue, laquelle est disposée en dessous du tube plongeur (7).

10. Unité de déviation selon la revendication 9, **caractérisée en ce que** la buse à gaz auxiliaire (85) comprend un raccordement de gaz séparé (87), et de préférence son ouverture de sortie (86) se situe à hauteur du fond de fluidisation (8).

11. Unité de déviation selon l'une quelconque des revendications précédentes, **caractérisée en ce qu'**elle est réalisée en forme de raccordement en T doté d'une ouverture horizontale supplémentaire (45) en regard du tube d'alimentation (14).

12. Unité de déviation selon la revendication 11, **caractérisée en ce que** l'ouverture horizontale supplémentaire (45) est fermée à l'aide d'un couvercle amovible (48) qui est fixé de préférence au moyen d'une bride (46).

13. Transporteur servant au transport pneumatique d'un produit en vrac, en particulier d'un produit pulvérulent, en tant que traînée de produit en vrac fluidisé (90), dont la face supérieure forme un niveau de produit en vrac (91), à travers des conduites tubulaires fermées, au point de départ desquelles est raccordée une source de gaz propulseur et lesquelles sont dotées au moins par endroits de fonds de fluidisation auxquels de l'air de fluidisation est acheminé, des conduites tubulaires horizontale et verticale étant reliées par le biais d'une unité de déviation,
**caractérisé en ce que**
l'unité de déviation est réalisée selon l'une quelconque des revendications 1 à 12.
